# EUROPEAN PATENT SPECIFICATION

(11) **EP 4 623 704 B1**
(45) Date of publication and mention of the grant of the patent: **15.04.2026**
(21) Application number: 24167500.8
(22) Date of filing: 28.03.2024
(51) Int. Cl.: A23N 4/20, A23N 7/00, B26D 3/26

(54) **MACHINE AND METHOD FOR AUTOMATICALLY PREPARING A WHOLE PINEAPPLE FOR CONSUMPTION AT A PINEAPPLE POINT OF SALE**
MASCHINE UND VERFAHREN ZUR AUTOMATISCHEN VORBEREITUNG EINER GANZEN ANANAS ZUM VERZEHR AN EINEM ANANAS-VERKAUFSORT
MACHINE ET MÉTHODE DE PRÉPARATION AUTOMATIQUE D'UN ANANAS ENTIER POUR LA CONSOMMATION À UN POINT DE VENTE D'ANANAS

(43) Date of publication of application: 01.10.2025
(73) Proprietor: SanLucar Fruit S.L.U., 46530 Puzol Valencia (ES)
(72) Inventor: Alvarez Ferrando, Carlos, 46021 Valencia (ES)
(74) Representative: Bernsmann, Falk

(56) References cited:
- EP-A1- 3 005 887
- WO-A1-2014/184298
- WO-A1-2020/055232
- GB-A- 1 569 019
- US-A- 3 874 280

## Description

### Technical Field

The present invention relates to a machine for automatically preparing a whole pineapple for consumption at a pineapple point of sale, the machine comprising a coring/peeling station for removing a core and/or a peel of the pineapple, wherein the coring/peeling station comprises at least one circular blade for separating the core and/or the peel from the pulp of the pineapple, and an axial pusher for pushing the pineapple along its longitudinal axis through the at least one circular blade while the circular blade is stationary with respect to the surrounding of the machine. The invention relates also to a method for automatically preparing a whole pineapple for consumption using the machine.

### Background Art

Machines for automatically preparing a whole pineapple for consumption at a pineapple point of sale are known from the publications WO 2014/184298 A1 and WO 2020/052232 A1, for example. In these machines, the core and the peel of the pineapple are removed, by pushing the pineapple along its longitudinal axis downwards through two concentric circular blades. It is necessary to hold the pineapple firmly in a clamping unit for positioning the pineapple reliably and precisely above the concentric blades before pushing the pineapple through the blades. The clamping unit having several small and movable parts that can easily get stuck by pineapple residues makes production, maintenance and cleaning of these machines complicated. Furthermore, since the pineapple falls from the concentric blades after peeling and coring, the pineapple must be caught in a container for transporting it to further processing stations, and the container hinders further processing steps.

In the machines disclosed in the publications EP 3623 122 A1, KR 10-1447372 B1, NL 2012779 B1 and DE 10 2014 013 454 B3, the pineapple is positioned stationary on a fruit support while two concentric blades are pushed downwards into the pineapple along its longitudinal axis for removing the peel and the core of the pineapple. In these machines, the pineapple can by positioned on the fruit support by a simple pusher, but additional means are necessary for preventing the pulp and the core of the pineapple from getting stuck in the concentric blades.

Documents EP 3 005 887 A and US 3 874 280 A show further apparatus for automatically processing pineapples.

### Technical Problem

The present invention solves the problem of providing a cheap, simple, and maintenance-friendly machine and method for automatically preparing a whole pineapple for consumption, wherein machine and the method can be used by untrained customers at a pineapple point of sale.

### Solution

The problem is solved by a machine according to claim 1 and by a method according to claim 10. Advantageous embodiments are subject of the dependent claims.

The machine is designed for automatically preparing a whole pineapple for consumption at a pineapple point of sale, preferably as a self-service machine to be used by untrained customers. According to the invention, the term "pineapple" is used for a pineapple fruit. According to the invention, a whole pineapple comprises the core of the pineapple, the pulp of the pineapple surrounding the core, the peel of the pineapple surrounding the pulp, and the leaves of the pineapple attached to a top end of the pineapple. A longitudinal axis of the pineapple is defined coaxial to the core of the pineapple. A bottom end of the pineapple, where the pineapple fruit was attached to a pineapple plant, lies opposite to the top end along the longitudinal axis.

According to the invention, the process of preparing a whole pineapple for consumption includes the steps of removing the top end of the pineapple, removing the bottom end of the pineapple, removing the peel of the pineapple, removing the core of the pineapple, cutting the pulp of the pineapple perpendicularly to the longitudinal axis of the pineapple into slices, and/or cutting the pulp of the pineapple along the longitudinal axis of the pineapple into segments.

The machine preferably comprises a coring/peeling station for removing a core and/or a peel of the pineapple, preferably after removal of the top end and the bottom end of the pineapple by a first processing station. For example, the longitudinal axis of the pineapple is oriented vertically during the removal of the core and/or the peel. The coring/peeling station preferably comprises at least one circular blade for separating the core and/or the peel from the pulp of the pineapple. More preferably, the coring/peeling station comprises two circular blades arranged concentrically for simultaneously separating the core and the peel from the pulp of the pineapple.

The coring/peeling station preferably comprises an axial pusher for pushing the pineapple along its longitudinal axis through the at least one circular blade while the circular blade is stationary with respect to the surrounding of the machine. Preferably, the axial pusher pushes the pineapple in a vertical direction, more preferably downwards.

The coring/peeling station preferably comprises a mobile support element for supporting the pineapple before and after being pushed through the at least one circular blade. Preferably, the mobile support element is displaceable along the longitudinal axis of the pineapple, more preferably in a vertical direction. Preferably, the mobile support element is designed for supporting the pineapple also while the pineapple is pushed through the at least one circular blade. The mobile support element has a substantially cylindrical or dish-like shape, for example.

By supporting the pineapple before, after and preferably while being pushed through the circular blade, the mobile support element facilitates the exact positioning of the pineapple before being cored and/or peeled, prevents the pineapple from falling an important distance after being cored and/or peeled, and preferably stabilizes the pineapple while being cored and/or peeled. Furthermore, the pineapple can be introduced into and removed from the coring/peeling station by simple pushers. This way, a reliable coring and/or peeling of the pineapple is achieved without needing a clamping unit holding the pineapple firmly before the coring and/or peeling step or a container for catching the pineapple after coring and/or peeling step. Consequently, the machine is simple in construction, cleaning, and maintenance.

### Description of Embodiments

The machine preferably comprises a first processing station comprising a top knife for removing a top end of the pineapple and a bottom knife for removing a bottom end of the pineapple, wherein the top knife and the bottom knife have parallel cutting directions and parallel cutting planes, wherein the top knife is arranged at a knife distance measured perpendicularly to the cutting planes from the bottom knife. According to the invention, the cutting plane of a knife is the plane spanned by the cutting edge and the cutting direction of the knife.

For example, the knives are arranged to cut the ends of the pineapple with horizontal cutting edges in a horizontal cutting direction, and the top knife is arranged at the knife distance vertically above the bottom knife. For example, the knives are stationary with respect to a surrounding of the machine, and the machine comprises a first pusher for pushing the pineapple through the first processing station, thereby removing the ends of the pineapple with the stationary knives. For example, the pusher is arranged for pushing the pineapple in an upright orientation with the longitudinal axis of the pineapple oriented vertically, wherein the pushing direction is horizontal.

Preferably, the mobile support element is attached to the axial pusher at a support element distance from the axial pusher, wherein the support element distance is greater or equal to the knife distance. This makes sure that the pineapple without its top end and bottom end can be placed between the mobile support element and the axial pusher.

If the knife distance is equal to the support element, the pineapple fits exactly between the mobile support element and the axial pusher leading to the advantage that the pineapple is held by the axial pusher and by the support element while being pushed through the at least one circular blade making the coring and/or peeling step very reliable.

If the support element distance is greater, preferably slightly greater, for instance 1 cm to 5 cm greater, than the knife distance, the pineapple is in contact only with the axial pusher while being pushed through the at least one circular blade and falls slightly onto the mobile support element afterwards.

The machine preferably comprises a length measuring device for measuring a length of the pineapple along the longitudinal axis of the pineapple. According to the invention, the length of the pineapple does not include the leaves of the pineapple. Preferably, the length of the pineapple is the length over which the pineapple has a diameter that is large enough to be peeled by the machine automatically without leaving a part of the peel on the pineapple. Therefore, the length of the pineapple determines the maximum value the knife distance between the top knife and the bottom knife can be adjusted to for getting a maximum amount of pineapple flesh without any resides of pineapple peel. According to the invention, the length of the pineapple can be measured directly or indirectly, for instance by measuring a mass or a diameter of the pineapple and calculating the length, for example using a calibration function.

The length measuring device preferably comprises at least one optical sensor for measuring the length of the pineapple and/or a mass sensor for measuring a mass of the pineapple.

The machine preferably comprises an adjustment device for adjusting the knife distance between the top knife and the bottom knife, preferably automatically depending on the length of the pineapple measured by the length measuring device. By automatically adjusting the distance, the amount of pulp wasted by removing the top end and the bottom end is minimized without requiring any additional user interaction.

The adjustment device preferably comprises an adjustment motor for adjusting the distance between the top knife and the bottom knife. The adjustment motor can be arranged for adjusting a position of the top knife, of the bottom knife, or of both knives with respect to the surrounding of the machine. If the knives have a horizontal cutting plane, the adjustment motor preferably is arranged for adjusting a position of the top knife with respect to the surrounding of the machine. This way, the static bottom knife advantageously can be part of a horizontal support surface supporting the pineapple while being transferred from the first processing station to a subsequent processing station. Preferably, the adjustment motor is positioned above the top knife and the bottom knife to avoid the adjustment motor being contaminated by pieces or juice of the pineapple.

The adjustment device preferably comprises a controller, the controller being connected to the measuring device and to the adjustment motor for adjusting the distance using the adjustment motor depending on the length of the pineapple. The connection of the controller to the measuring device and to the adjustment motor can be a wired connection and/or a wireless connection. The controller preferably comprises a programmable logic controller and/or a computing unit, for example an embedded computing unit.

If the machine comprises the adjustment device for adjusting the knife distance, the support element distance between the axial pusher and the mobile support element preferably is greater or equal to a maximum of the adjustable knife distance. This makes sure, that the above-mentioned advantages of a support element distance being greater or equal to the knife distance apply for every possible knife distance.

The coring/peeling station preferably comprises a spring element, for instance a coil spring, biasing the mobile support element towards the axial pusher. This way, the pineapple can increase the support element distance against a recoil force of the spring element when the pineapple is introduced into the coring/peeling station to the length of the pineapple. Since the mobile support element is biased towards the axial pusher, the pineapple is clamped between the support element and the axial pusher while being pushed through the at least one circular blade leading to a very reliable coring and/or peeling step.

The mobile support element preferably comprises at least one recess, preferably two recesses, for receiving the at least one circular blade. Consequently, the at least one circular blade can be concealed in the at least one recess so that the circular blade does not hinder the placement of the pineapple on the mobile support element, for instance by pushing the pineapple in a horizontal direction onto the mobile support element.

The machine preferably comprises a third processing station for cutting the pineapple into a plurality of slices orthogonally to the longitudinal axis of the pineapple and/or into a plurality of segments along the longitudinal axis, preferably after removal of the core and/or the peel of the pineapple by the coring/peeling station.

The third processing station preferably comprises a plurality of, preferably four, five, six or seven, slicing knives having parallel cutting directions and parallel cutting planes. The slicing knives are preferably arranged at equal distances from one another, for example at a distance of 15 mm to 25 mm, preferably 20 mm, from one another. Preferably, the cutting directions and cutting planes of the slicing knives are oriented horizontally. Preferably, the slicing knives are stationary with respect to the surrounding of the machine, and the machine comprises a second pusher for pushing the pineapple, preferably in a horizontal direction, through spaces between the stationary slicing knives. The second pusher preferably comprises a number of fingers corresponding to the number of spaces between the slicing knives wherein each finger is designed for pushing one slice of the pineapple through a space between two adjacent slicing knives further into the third processing station.

Preferably, the distance between the top knife and the bottom knife is adjustable in steps to integer multiples of to the distance between two adjacent slicing knives. This has the advantage that independent of the length of the pineapple, the machine prepares a plurality of slices of equal thickness making consumption of the slices easier. For instance, the distance between the top knife and the bottom knife is adjustable to four, five, six and/or seven times the distance between two adjacent slicing knives.

The third processing station preferably is designed for cutting the pineapple into a plurality of segments by driving a segmenting knife along the longitudinal axis of the pineapple into the pineapple; wherein the machine comprises a common motor for driving the axial pusher of the coring/peeling station and the segmenting knife of the third processing station. The common motor makes the machine cheap and simple in construction and maintenance.

The segmenting knife preferably has a shaft arranged in parallel to the longitudinal axis of the pineapple and a plurality of, preferably six, eight or ten, flat blades arranged radially on the shaft. The blades are preferably arranged at equal angular intervals from one another around the shaft. The shaft of the segmenting knife preferably is designed for entering a hole in the pineapple left by the core of the pineapple that was previously removed by the coring/peeling station.

Preferably, the common motor is designed for simultaneously driving the axial pusher and the segmenting knife with the same speed in the same direction, for instance via a common transmission.

The machine preferably comprises a first pusher for pushing the pineapple on a first horizontal plane into the coring/peeling station and a second pusher for pushing the pineapple on a second horizontal plane arranged below the first horizontal plane out of the coring/peeling station.

Using two pushers, the pineapple can be moved into and out of the coring/peeling station in a simple way. The machine preferably comprises a first support surface supporting the pineapple while being pushed by the first pusher and/or a second support surface supporting the pineapple while being pushed by the second pusher. The first support surface and/or the second support surface may be solid or comprise a number of holes. For example, the first support surface and/or the second support surface is formed by at least two rails supporting the pineapple. The first pusher and/or the second pusher may be designed for pushing the pineapple along a linear or curved path, preferably along a segment of a circular path.

For example, the second horizontal plane is arranged by at least once, preferably once to twice, a length of the pineapple without its top end and bottom end below the first horizontal plane allowing for an unhindered movement of the pineapple between the first horizontal plane and the second horizontal plane.

The pineapple may be transferred from the first horizontal plane to the second horizontal plane in the coring/peeling station, preferably by pushing the pineapple vertically through the at least one circular blade of the coring/peeling station.

By designing the machine with two pushers, each of the pushers can be adapted individually to the properties of the pineapple during the processing steps served by the respective pusher. For example, the first pusher can be optimised for securely holding the whole pineapple, while the second pusher can be optimised for securely holding the pineapple having a smaller diameter and a more slippery surface after removal of the peel. Furthermore, the second pusher may comprise a number of fingers for passing between slicing knives of the third processing station while the first pusher may be of a simpler, solid design. Arranging the two pushers on different horizontal planes has the advantage that a movement of one pusher is not hindered by the other pusher.

Preferably, the top knife of the first processing station is arranged vertically above the bottom knife of the first processing station, wherein a vertical height of the first pusher is smaller than a vertical height of the second pusher. If the top knife is arranged above the bottom knife, the pineapple is processed with its longitudinal axis oriented vertically in an upright position by the first processing station and preferably also by the subsequent processing stations. If the distance between the top knife and the bottom knife is adjustable, the first pusher must be small enough to pass between the top knife and the bottom knife at their smallest distance.

On the other hand, the second pusher preferably has a height corresponding to the largest distance between the top knife and the bottom knife so that the second pusher can push all slices of the pineapple created by the slicing knives of the third processing station further into the third processing station even for the biggest pineapples being processed. Consequently, it is preferable that a vertical height of the first pusher is smaller than a vertical height of the second pusher.

The machine preferably comprises a common pusher drive for driving the first pusher and the second pusher making the design of the machine simple. Preferably, each of the first pusher and the second pusher pushes the pineapple over a segment of a circle, wherein the common pusher drive comprises a common pusher drive shaft driving the first pusher and the second pusher.

Preferably, the first pusher and the second pusher are fixed to the common pusher drive shaft, wherein the second pusher may be arranged exactly below the first pusher or at an angular position behind the first pusher in the direction of movement of the pineapple. Positioning the second pusher slightly behind the first pusher has the advantage that the pineapple does not fall on the second pusher when falling from the first horizontal plane to the second horizontal plane. If the second pusher is arranged exactly below the first pusher, the pineapple can be prevented from falling on the second pusher by slightly retreating the two pushers before the pineapple falls.

In other embodiments, the first pusher is arranged at an angular position behind the second pusher in the direction of movement of the pineapple. This has the advantage of avoiding a collision between the first pusher and the segmenting knife of the third processing station. To prevent the pineapple from falling on the second pusher when falling from the first horizontal plane to the second horizontal plane, the pushers must move back against the direction of movement of the pineapple before the pineapple falls.

The machine preferably comprises at least one horizontal shutter, wherein the second pusher is arranged for pushing the pineapple on the second horizontal plane onto the at least one horizontal shutter, wherein the horizontal shutter is arranged for dropping the pineapple from the second horizontal plane into a recipient for removing the pineapple from the machine.

Preferably, the at least one horizontal shutter is arranged in the third processing station, preferably below the segmenting knife of the third processing station. The at least one horizontal shutter can maintain the pineapple on the surface of the closed shutter while it is processed in the third processing station. Once the processing is completed, the shutter can be opened to release the processed pineapple into the recipient placed below the at least one horizontal shutter. The machine preferably comprises a sensor, for instance an optical sensor, for automatic verification whether a recipient is properly placed under the at least one horizontal shutter before opening the shutter.

The at least one horizontal shutter is operated, for instance, by the second pusher pushing the pineapple onto the shutter. For example, the machine comprises at least one spring element, for instance a coil spring, biasing the at least one horizontal shutter into the open position. Preferably, the second pusher comprises at least one actuator moving the at least one horizontal shutter against a recoil force of the spring element into the closed position, when the pusher pushes the pineapple onto the shutter. When the pineapple shall be released, the second pusher can be retreated thereby releasing the at least one horizontal shutter so that the recoil force of the spring element returns the shutter to the open position.

The invention relates to a method for automatically preparing a whole pineapple for consumption at a pineapple point of sale uses a machine according to the invention. Definitions, features, and benefits described in the context of the machine apply *mutatis mutandis* to the method.

The method comprises the step of automatically removing a core and/or a peel of the pineapple using the coring/peeling station of the machine, wherein the step of automatically removing the core and/or the peel of the pineapple comprises pushing the pineapple along its longitudinal axis through the at least one circular blade of the coring/peeling station using the axial pusher of the coring/peeling station while the circular blade is stationary with respect to the surrounding of the machine. Preferably, the pineapple is supported by the mobile support element of the coring/peeling station before and after being pushed, more preferably also while being pushed, through the at least one circular blade.

The method preferably comprises the step of automatically cutting the pineapple into a plurality of segments by driving the segmenting knife of the third processing station of the machine along the longitudinal axis of the pineapple into the pineapple, wherein the axial pusher of the coring/peeling station and the segmenting knife of the third processing station are driven by a common motor of the machine. Preferably, the axial pusher and the segmenting knife are driven simultaneously at the same speed in the same direction making construction and programming of the machine simple.

The method preferably comprises the steps of pushing the pineapple from the coring/peeling station to the third processing station using a second pusher of the machine, and simultaneously raising the axial pusher of the coring/peeling station and the segmenting knife of the third processing station using the common motor while the pineapple is pushed from the coring/peeling station to the third processing station. The axial pusher - and the segmenting knife, if its movement is coupled to the axial pusher - is lowered when peeling and/or coring the pineapple. Before the arrival of the pineapple in the third processing station, the segmenting knife - and the axial pusher, if its movement is coupled to the segmenting knife - must be raised. Therefore, raising the segmenting knife and the axial pusher while the pineapple is pushed to the third processing station leads to a simple and fast processing of the pineapple.

The method preferably comprises the step of interrupting the step of pushing the pineapple from the coring/peeling station to the third processing station for a waiting period of, for instance, 1 s to 5 s. The waiting period makes sure that the segmenting knife is raised before the arrival of the pineapple in the third processing station. A waiting period is more reliable to implement than a sufficiently slow continuous movement of the second pusher.

The method preferably comprises a step of measuring a length of the pineapple along the longitudinal axis of the pineapple using a length measuring device of the machine, wherein measuring the length comprises measuring the length using at least one optical sensor and/or measuring a mass of the pineapple using a mass sensor.

The method preferably comprises a step of automatically adjusting the distance between the top knife and the bottom knife of the first processing station of the machine depending on the measured length of the pineapple using an adjustment device of the machine. Preferably, the distance between the top knife and the bottom knife is adjusted to an integer multiple of a distance between adjacent slicing knives of the third processing station of the machine.

The method preferably comprises a step of removing a top end of the pineapple using the top knife and removing a bottom end of the pineapple using the bottom knife. Preferably, the top end and the bottom end are removed by pushing the pineapple through a space between the top knife and the bottom knife, preferably in a horizontal direction.

The machine preferably comprises an adjustment motor for adjusting the distance between the top knife and the bottom knife and a controller connected to the measuring device and to the adjustment motor. The step of measuring the length of the pineapple preferably comprises the controller measuring the length using the measuring device, wherein the step of automatically adjusting the distance comprises the controller adjusting the distance using the adjustment motor depending on the length of the pineapple.

### Brief Description of Drawings

The following description and drawings of various embodiments of the present invention are presented for purposes of illustration but are not intended to be exhaustive or limited to the embodiments disclosed.
Figure 1 shows an overview of a machine according to the invention.
Figures 2 to 8 show an embodiment of the coring/peeling station of a machine according to the invention during subsequent steps of peeling and coring a pineapple.

### Fig.1

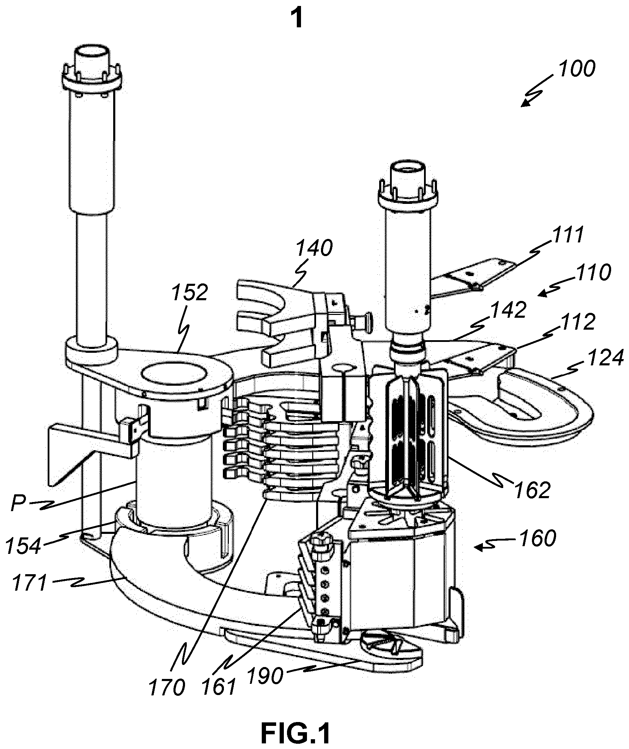

Figure 1 shows an overview of an embodiment of a machine 100 according to the invention.

The embodiment of the machine 100 shown in figure 1 comprises a first processing station 110 having a top knife 111 for removing a top end of a pineapple P and a bottom knife 112 for removing a bottom end of the pineapple P, wherein the top knife 111 and the bottom knife 112 have parallel cutting directions and parallel cutting planes, and the top knife 111 is arranged at a distance measured perpendicularly to the cutting planes from the bottom knife 112. Preferably, the cutting directions and the cutting planes are horizontal.

In the embodiment shown, the top knife 111 and the bottom knife 112 are stationary with respect to a surrounding of the machine, and the machine comprises a first pusher 140 for pushing the pineapple P through the first processing station 110, thereby removing the ends of the pineapple P with the stationary top knife 111 and bottom knife 112.

Before being pushed through the first processing station 110, the pineapple P is placed by a user of the machine on a support element 124, for example. The bottom knife 112 is connected to a first support surface 142 for supporting the pineapple P when it is pushed with the first pusher 140 from the first processing station 110 to further processing stations, for instance.

Furthermore, the machine 100 comprises a coring/peeling station 150 for removing a core and/or a peel of the pineapple. The coring/peeling station 150 comprises at least one circular blade (not shown) for separating the core and/or the peel from the pulp of the pineapple P. In the embodiment shown in figure 1, the coring/peeling station 150 comprises an axial pusher 152 for pushing the pineapple P along its longitudinal axis, for instance vertically downwards, through the at least one circular blade while the circular blade is stationary with respect to the surrounding of the machine 100.

The coring/peeling station 150 shown in figure 1 comprises a mobile support element 154 supporting the pineapple P while the pineapple P is pushed through the at least one circular blade 151. For instance, the mobile support element 154 is attached to the axial pusher 152 at a support element distance from the axial pusher 152 so that the pineapple P without its top end and bottom end can be placed between the axial pusher 152 and the mobile support element 154.

Additionally, the machine 100 comprises a third processing station 160 for cutting the pineapple P into a plurality of slices orthogonally to the longitudinal axis of the pineapple P and/or into a plurality of segments along the longitudinal axis after removal of the core and/or the peel of the pineapple P by the coring/peeling station 150, and a second pusher 170 for pushing the pineapple P on a second horizontal plane, for instance on a second support surface 171, arranged below the first horizontal plane into the third processing station 160.

The first pusher 140 and the second pusher 170 are arranged one above the other and designed for pushing the pineapple P along segments of a circular path.

The machine comprises a horizontal shutter 190, being movable between a closed position holding the pineapple P above a recipient (not shown) for taking the pineapple P out of the machine 100 and an open position (shown in figure 1) letting the pineapple P fall into the recipient.

The cutting station 160 comprises, for instance, five slicing knives 161 having parallel cutting directions and parallel cutting planes. The cutting directions and cutting planes of the slicing knives 161 are oriented horizontally, for example. The slicing knives 161 are stationary with respect to the surrounding of the machine 100, and the second pusher 170 is designed for pushing the pineapple P, for instance in a horizontal direction, through spaces between the stationary slicing knives 161.

The cutting station 160 comprises a segmenting knife 162 for cutting the pineapple P along a vertical axis into pineapple segments, while the pineapple P is placed on the horizontal shutter 190. In figure 1, the segmenting knife 162 is shown in a position retracted from the horizontal shutter 190.

Preferably, the segmenting knife 162 and the axial pusher 152 of the coring/peeling station 150 are driven by a common motor (not shown).

### Fig.2

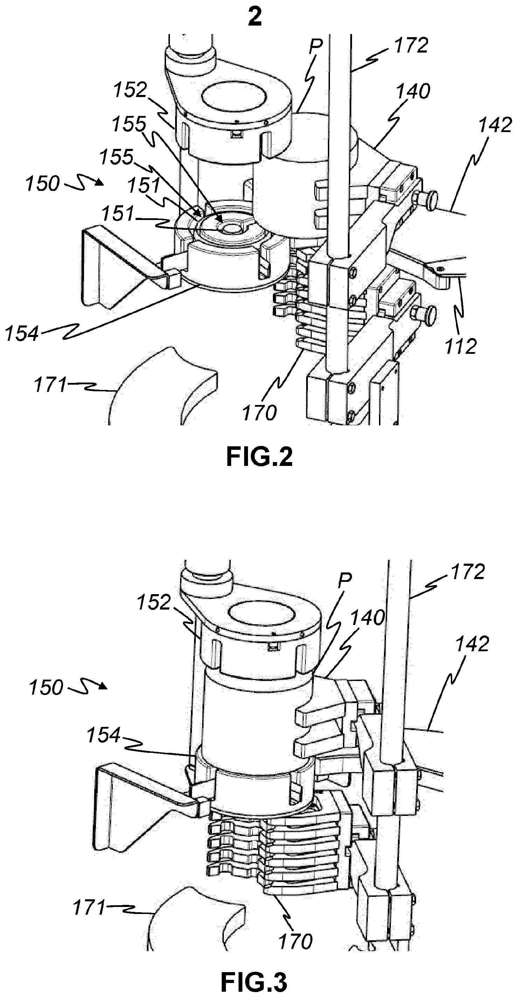

Figure 2 shows a closer view of an embodiment of the coring/peeling station 150 of a machine 100 according to the invention while the pineapple P is pushed on the first support surface 142 into the coring/peeling station 150 using the first pusher 140.

In the embodiment shown in figures 2 to 8, the coring/peeling station 150 comprises at two concentric circular blades 151 for simultaneously separating the core and the peel from the pulp of the pineapple P. The coring/peeling station 150 comprises an axial pusher 152 for pushing the pineapple P along its longitudinal axis, for instance vertically downwards, through the circular blades 151 while the circular blades 151 are stationary with respect to the surrounding of the machine 100.

The coring/peeling station 150 comprises a mobile support element 154 supporting the pineapple P while the pineapple P is pushed through the at least one circular blade 151. For instance, the mobile support element 154 is attached to the axial pusher 152 at a support element distance from the axial pusher 152 so that the pineapple P without its top end and bottom end can be placed between the axial pusher 152 and the mobile support element 154.

The mobile support element 154 has recesses 155 for the circular blades 151. Consequently, the circular blades 151 can be concealed in the recesses 155 as shown in figure 2, so that the circular blades 151 do not hinder the placement of the pineapple P on the mobile support element 154, for example by pushing the pineapple P in a horizontal direction onto the mobile support element 154 as shown in figure 2.

Further components of the machine 100 shown in figures 2 to 8 are labelled with the same reference signs as in figure 1 and may be designed as described for the machine 100 shown in figure 1.

The first pusher 140 and the second pusher 170 of the machine 100 are attached to a common pusher drive shaft 172 for simultaneously driving the first pusher 140 and the second pusher 170 at the same speed and in the same direction.

### Fig.3

Figure 3 shows the coring/peeling station 150 of figure 2 when the pineapple P is fully pushed onto the mobile support element 154 by the first pusher 140.

In figure 3, a space is visible between the pineapple P and the axial pusher 152 showing that the pineapple P can be easily inserted between the axial pusher 152 and the mobile support element 154. This is because a support element distance between the mobile support element 154 and the axial pusher 152 is slightly greater, for example 1 cm to 5 cm greater, than a knife distance between the top knife 111 and the bottom knife 112 of the first processing station 110 of the machine 100.

### Fig.4

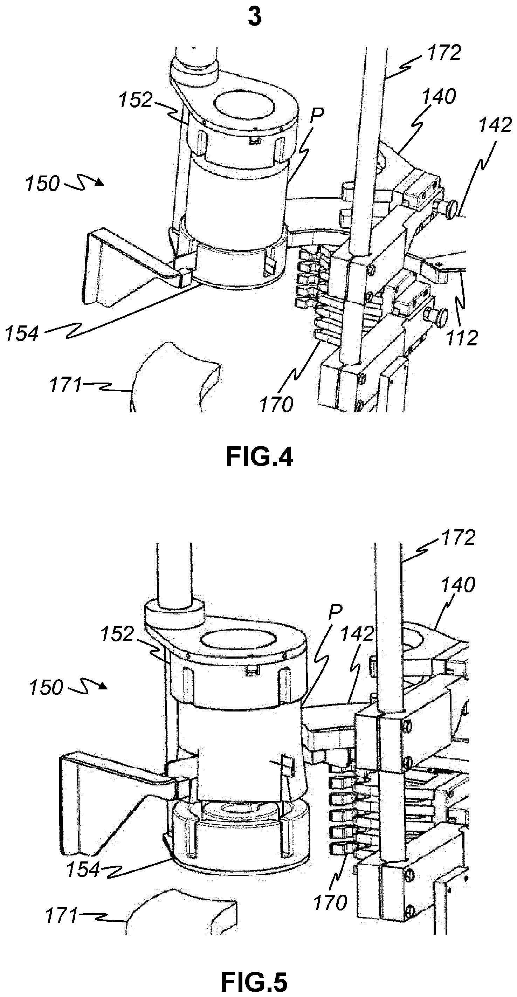

Figure 4 shows the coring/peeling station 150 of figure 2 when the first pusher 140 is retracted from the coring/peeling station 150 after pushing the pineapple onto the mobile support element 154.

### Fig.5

Figure 5 shows the coring/peeling station 150 of figure 2 when the axial pusher 152 is pushing the pineapple P through the circular blades (hidden by the pineapple P) after retracting the first pusher 140 from the coring/peeling station 150. In figure 5, it can be seen that the circular blades separate the peel from the pineapple P and that there is a space between the pineapple P and the mobile support element 154 because a length of the pineapple along its longitudinal axis is slightly smaller than the support element distance between the mobile support element 154 and the axial pusher.

### Fig.6

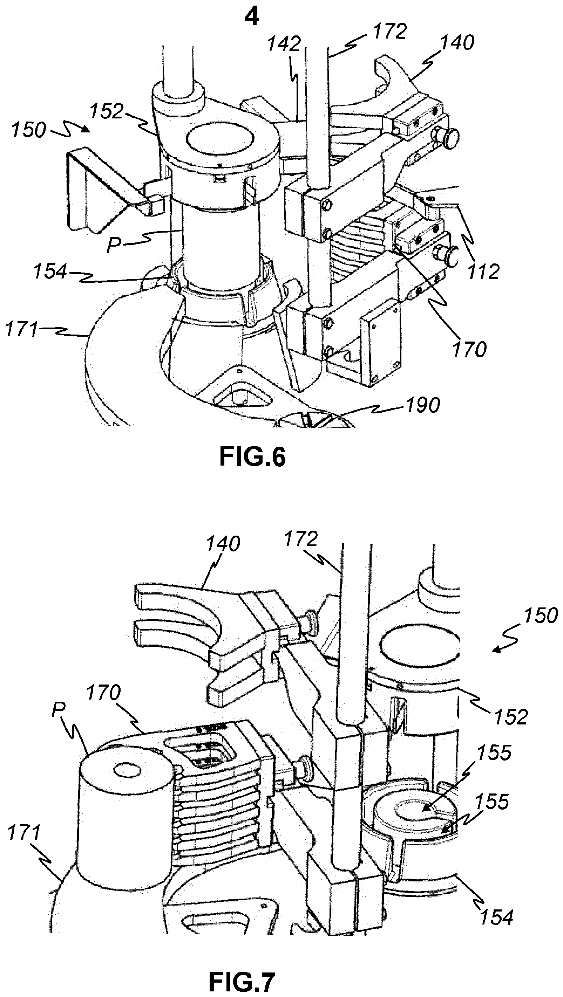

Figure 6 shows the coring/peeling station 150 of figure 2 when the axial pusher 152 has pushed the pineapple P completely through the circular blades (hidden by the axial pusher 152), and the pineapple P has fallen onto the mobile support element 154.

### Fig.7

Figure 7 shows the coring/peeling station 150 of figure 2 when the second pusher 170 is pushing the pineapple P on the second support surface 171 from the coring/peeling station 150 to the third processing station (not shown) of the machine after the pineapple P has fallen onto the mobile support element 154.

### Fig.8

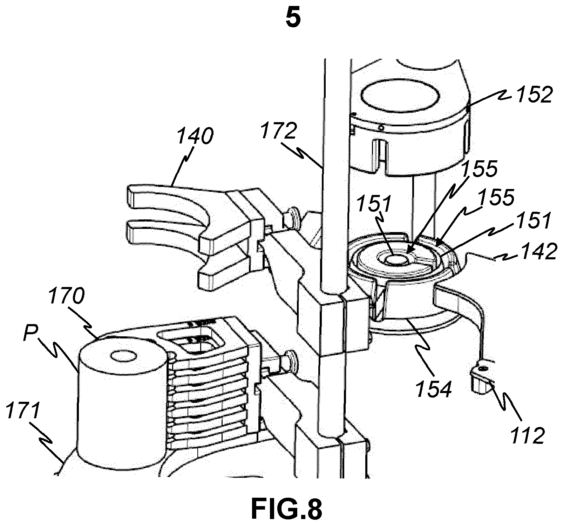

Figure 8 shows the coring/peeling station 150 of figure 2 when the axial pusher 152 and the mobile support element 154 are raised to their initial position after the second pusher 170 has pushed the pineapple P out of the coring/peeling station 150.

### Reference Signs List

| | | | |
|---|---|---|---|
| 100 | machine | 154 | mobile support element |
| 110 | first processing station | 155 | recess |
| 111 | top knife | 160 | third processing station |
| 112 | bottom knife | 161 | slicing knife |
| 124 | support element | 162 | segmenting knife |
| 140 | first pusher | 170 | second pusher |
| 142 | first support surface | 171 | second support surface |
| 150 | coring/peeling station | 172 | common pusher drive shaft |
| 151 | circular blade | 190 | horizontal shutter |
| 152 | axial pusher | P | pineapple |

## Claims

1. A machine (100) for automatically preparing a whole pineapple (P) for consumption at a pineapple point of sale, the machine (100) comprising a coring/peeling station (150) for removing a core and/or a peel of the pineapple (P), wherein the coring/peeling station (150) comprises
a. at least one circular blade (151) for separating the core and/or the peel from the pulp of the pineapple (P), and
b. an axial pusher (152) for pushing the pineapple (P) along its longitudinal axis through the at least one circular blade (151) while the circular blade (151) is stationary with respect to the surrounding of the machine (100);
**characterized in that**
c. the coring/peeling station (150) comprises a mobile support element (154) for supporting the pineapple (P) before and after being driven through the at least one circular blade (151).

2. The machine (100) according to claim 1,
a. wherein the machine (100) comprises a first processing station (110) comprising a top knife (111) for removing a top end of the pineapple (P) and a bottom knife (112) for removing a bottom end of the pineapple (P);
b. wherein the top knife (111) and the bottom knife (112) have parallel cutting directions and parallel cutting planes;
c. wherein the top knife (111) is arranged at a knife distance measured perpendicularly to the cutting planes from the bottom knife (112);
d. wherein the mobile support element (154) is attached to the axial pusher (152) at a support element distance from the axial pusher (152);
e. wherein the support element distance is greater or equal to the knife distance.

3. The machine (100) according to one of claims 1 to 2,
a. wherein the machine (100) comprises a first processing station (110) comprising a top knife (111) for removing a top end of the pineapple (P) and a bottom knife (112) for removing a bottom end of the pineapple (P);
b. wherein the top knife (111) and the bottom knife (112) have parallel cutting directions and parallel cutting planes;
c. wherein the top knife (111) is arranged at a knife distance measured perpendicularly to the cutting planes from the bottom knife (112);
d. wherein the machine (100) comprises an adjustment device (130) for adjusting the knife distance;
e. wherein the mobile support element (154) is attached to the axial pusher (152) at a support element distance from the axial pusher (152);
f. wherein the support element distance is greater or equal to a maximum of the adjustable knife distance.

4. The machine (100) according to one of claims 1 to 3,
wherein the coring/peeling station (150) comprises a spring element biasing the mobile support element (154) towards the axial pusher (152).

5. The machine (100) according to one of claims 1 to 4,
wherein the mobile support element (154) comprises at least one recess (155) for receiving the at least one circular blade (151).

6. The machine (100) according to one of claims 1 to 5,
a. wherein the machine (100) comprises a third processing station (160) for cutting the pineapple (P) into a plurality of segments by driving a segmenting knife (162) of the third processing station (160) along the longitudinal axis of the pineapple (P) into the pineapple (P);
b. wherein the machine (100) comprises a common motor (156) for driving the axial pusher (152) of the coring/peeling station (150) and the segmenting knife (162) of the third processing station (160).

7. The machine (100) according to one of claims 1 to 6, wherein the machine (100) comprises
a. a first pusher (140) for pushing the pineapple (P) on a first horizontal plane into the coring/peeling station (150); and
b. a second pusher (170) for pushing the pineapple (P) on a second horizontal plane arranged below the first horizontal plane out of the coring/peeling station (150).

8. The machine (100) according to claim 7,
a. wherein the machine (100) comprises a first processing station (110) comprising a top knife (111) for removing a top end of the pineapple (P) and a bottom knife (112) for removing a bottom end of the pineapple (P);
b. wherein the top knife (111) and the bottom knife (112) have parallel cutting directions and parallel cutting planes;
c. wherein the top knife (111) is arranged at a knife distance measured perpendicularly to the cutting planes vertically above the bottom knife (112);
d. wherein the of the first pusher (140) is arranged for pushing the pineapple (P) through the first processing station (110);
e. wherein a vertical height of the first pusher (140) smaller than a vertical height of the second pusher (170).

9. The machine (100) according to one of claims 7 to 8,
wherein the machine (100) comprises a common pusher drive for driving the first pusher (140) and the second pusher (170).

10. A method for automatically preparing a whole pineapple (P) for consumption at a pineapple point of sale using a machine (100) according to one of claims 1 to 9,
a. the method comprising the step of automatically removing a core and/or a peel of the pineapple (P) using the coring/peeling station (150) of the machine (100);
b. wherein the step of automatically removing the core and/or the peel of the pineapple (P) comprises pushing the pineapple (P) along its longitudinal axis through the at least one circular blade (151) of the coring/peeling station (150) using the axial pusher (152) of the coring/peeling station (150) while the circular blade (151) is stationary with respect to the surrounding of the machine (100);
c. wherein the pineapple (P) is supported by the mobile support element (154) of the coring/peeling station (150) before and after being driven through the at least one circular blade (151).

11. The method according to claim 10,
a. wherein the method comprises the step of automatically cutting the pineapple (P) into a plurality of segments by driving a segmenting knife (162) of a third processing station (160) of the machine (100) along the longitudinal axis of the pineapple (P) into the pineapple (P);
a. wherein the axial pusher (152) of the coring/peeling station (150) and the segmenting knife (162) of the third processing station (160) are driven by a common motor (156) of the machine (100).

12. The method according to claim 11, wherein the method comprises the following steps:
a. pushing the pineapple (P) from the coring/peeling station (150) to the third processing station (160) using a second pusher (170) of the machine (100);
b. simultaneously raising the axial pusher (152) of the coring/peeling station (150) and the segmenting knife (162) of the third processing station (160) using the common motor (156) while the pineapple (P) is pushed from the coring/peeling station (150) to the third processing station (160).

13. The method according to claim 12,
wherein the method comprises the step of interrupting the step of pushing the pineapple (P) from the coring/peeling station (150) to the third processing station (160) for a waiting period.

## Patentansprüche

1. Maschine (100) zur automatischen Vorbereitung einer ganzen Ananas (P) zum Verzehr an einem Ananas-Verkaufsort, wobei die Maschine (100) eine Entkern-/Schälstation (150) zum Entfernen eines Kerns und/oder einer Schale der Ananas (P) umfasst, die Entkern-/Schälstation (150) umfassend
a. mindestens eine kreisförmige Klinge (151) zum Trennen des Kerns und/oder der Schale vom Fruchtfleisch der Ananas (P) und
b. einen axialen Schieber (152) zum Schieben der Ananas (P) entlang ihrer Längsachse durch die mindestens eine kreisförmige Klinge (151), während die kreisförmige Klinge (151) in Bezug auf die Umgebung der Maschine (100) stationär ist;
**dadurch gekennzeichnet, dass**
c. die Entkern-/Schälstation (150) ein bewegliches Stützelement (154) zum Stützen der Ananas (P) vor und nach dem Schieben der Ananas (P) durch die mindestens eine kreisförmige Klinge (151) umfasst.

2. Maschine (100) gemäß Anspruch 1,
a. wobei die Maschine (100) eine erste Bearbeitungsstation (110) umfasst, die ein oberes Messer (111) zum Entfernen eines oberen Endes der Ananas (P) und ein unteres Messer (112) zum Entfernen eines unteren Endes der Ananas (P) umfasst;
b. wobei das obere Messer (111) und das untere Messer (112) parallele Schnittrichtungen und parallele Schnittebenen aufweisen;
c. wobei das obere Messer (111) in einem senkrecht zu den Schneidebenen gemessenen Messerabstand vom unteren Messer (112) angeordnet ist;
d. wobei das bewegliche Stützelement (154) in einem Stützelementabstand vom axialen Schieber (152) am axialen Schieber (152) befestigt ist;
e. wobei der Stützelementabstand größer oder gleich dem Messerabstand ist.

3. Maschine (100) gemäß einem der Ansprüche 1 bis 2,
a. wobei die Maschine (100) eine erste Bearbeitungsstation (110) umfasst, die ein oberes Messer (111) zum Entfernen eines oberen Endes der Ananas (P) und ein unteres Messer (112) zum Entfernen eines unteren Endes der Ananas (P) umfasst;
b. wobei das obere Messer (111) und das untere Messer (112) parallele Schnittrichtungen und parallele Schnittebenen aufweisen;
c. wobei das obere Messer (111) in einem senkrecht zu den Schnittebenen gemessenen Messerabstand vom unteren Messer (112) angeordnet ist;
d. wobei die Maschine (100) eine Einstellvorrichtung (130) zum Einstellen des Messerabstands umfasst;
e. wobei das bewegliche Stützelement (154) in einem Stützelementabstand vom axialen Schieber (152) am axialen Schieber (152) befestigt ist;
f. wobei der Stützelementabstand größer oder gleich einem Maximum des einstellbaren Messerabstands ist.

4. Maschine (100) gemäß einem der Ansprüche 1 bis 3,
wobei die Entkern-/Schälstation (150) ein Federelement umfasst, das das bewegliche Stützelement (154) auf den axialen Schieber (152) zu vorspannt.

5. Maschine (100) gemäß einem der Ansprüche 1 bis 4,
wobei das bewegliche Stützelement (154) mindestens eine Aussparung (155) zur Aufnahme der mindestens einen kreisförmigen Klinge (151) umfasst.

6. Maschine (100) gemäß einem der Ansprüche 1 bis 5,
a. wobei die Maschine (100) eine dritte Bearbeitungsstation (160) zum Schneiden der Ananas (P) in eine Vielzahl von Segmenten umfasst, indem ein Segmentiermesser (162) der dritten Bearbeitungsstation (160) entlang der Längsachse der Ananas (P) in die Ananas (P) getrieben wird;
b. wobei die Maschine (100) einen gemeinsamen Motor (156) zum Antreiben des axialen Schiebers (152) der Entkern-/Schälstation (150) und des Segmentiermessers (162) der dritten Bearbeitungsstation (160) umfasst.

7. Maschine (100) gemäß einem der Ansprüche 1 bis 6, die Maschine (100) umfassend
a. einen ersten Schieber (140) zum Schieben der Ananas (P) auf einer ersten horizontalen Ebene in die Entkern-/Schälstation (150); und
b. einen zweiten Schieber (170) zum Schieben der Ananas (P) auf einer zweiten horizontalen Ebene, die unterhalb der ersten horizontalen Ebene angeordnet ist, aus der Entkern-/Schälstation (150) heraus.

8. Maschine (100) gemäß Anspruch 7,
a. wobei die Maschine (100) eine erste Bearbeitungsstation (110) umfasst, die ein oberes Messer (111) zum Entfernen eines oberen Endes der Ananas (P) und ein unteres Messer (112) zum Entfernen eines unteren Endes der Ananas (P) umfasst;
b. wobei das obere Messer (111) und das untere Messer (112) parallele Schnittrichtungen und parallele Schnittebenen aufweisen;
c. wobei das obere Messer (111) in einem senkrecht zu den Schneidebenen gemessenen Messerabstand vertikal über dem unteren Messer (112) angeordnet ist;
d. wobei der erste Schieber (140) zum Schieben der Ananas (P) durch die erste Bearbeitungsstation (110) angeordnet ist;
e. wobei eine vertikale Höhe des ersten Schiebers (140) kleiner ist als eine vertikale Höhe des zweiten Schiebers (170).

9. Maschine (100) gemäß einem der Ansprüche 7 bis 8,
wobei die Maschine (100) einen gemeinsamen Schieberantrieb zum Antreiben des ersten Schiebers (140) und des zweiten Schiebers (170) umfasst.

10. Verfahren zur automatischen Vorbereitung einer ganzen Ananas (P) zum Verzehr an einem Ananas-Verkaufsort unter Verwendung einer Maschine (100) gemäß einem der Ansprüche 1 bis 9,
a. wobei das Verfahren ein automatisches Entfernen eines Kerns und/oder einer Schale der Ananas (P) unter Verwendung der Entkern-/Schälstation (150) der Maschine (100) umfasst;
b. wobei das automatische Entfernen des Kerns und/oder der Schale der Ananas (P) ein Schieben der Ananas (P) entlang ihrer Längsachse durch die mindestens eine kreisförmige Klinge (151) der Entkern-/Schälstation (150) unter Verwendung des axialen Schiebers (152) der Entkern-/Schälstation (150) der Maschine (100) umfasst, während die kreisförmige Klinge (151) in Bezug auf die Umgebung der Maschine (100) stationär ist;
c. wobei die Ananas (P) vor und nach dem Schieben der Ananas (P) durch die mindestens eine kreisförmige Klinge (151) durch das bewegliche Stützelement (154) der Entkern-/Schälstation (150) gestützt wird.

11. Verfahren nach Anspruch 10,
a. wobei das Verfahren ein automatisches Schneiden der Ananas (P) in mehrere Segmente umfasst, indem ein Segmentiermesser (162) einer dritten Bearbeitungsstation (160) der Maschine (100) entlang der Längsachse der Ananas (P) in die Ananas (P) getrieben wird;
b. wobei der axiale Schieber (152) der Entkern-/Schälstation (150) und das Segmentiermesser (162) der dritten Bearbeitungsstation (160) von einem gemeinsamen Motor (156) der Maschine (100) angetrieben werden.

12. Verfahren nach Anspruch 11, wobei das Verfahren die folgenden Schritte umfasst:
a. Schieben der Ananas (P) von der Entkern-/Schälstation (150) zur dritten Bearbeitungsstation (160) unter Verwendung eines zweiten Schiebers (170) der Maschine (100);
b. gleichzeitiges Anheben des axialen Schiebers (152) der Entkern-/Schälstation (150) und des Segmentiermessers (162) der dritten Bearbeitungsstation (160) unter Verwendung des gemeinsamen Motors (156), während die Ananas (P) von der Entkern-/Schälstation (150) zur dritten Bearbeitungsstation (160) geschoben wird.

13. Verfahren nach Anspruch 12,
wobei das Verfahren ein Unterbrechen des Schiebens der Ananas (P) von der Entkern-/Schälstation (150) zur dritten Bearbeitungsstation (160) für eine Wartezeit umfasst.

## Revendications

1. Machine (100) de préparation automatique d'un ananas (P) entier pour la consommation à un point de vente d'ananas, la machine (100) comprenant une station d'évidement/épluchage (150) destinée à retirer le cœur et/ou la peau de l'ananas (P), la station d'évidement/épluchage (150) comprenant
a. au moins une lame circulaire (151) pour séparer le cœur et/ou la peau de la pulpe de l'ananas (P), et
b. un poussoir axial (152) pour pousser l'ananas (P) le long de son axe longitudinal à travers ladite au moins une lame circulaire (151) tandis que la lame circulaire (151) est stationnaire par rapport à l'environnement de la machine (100) ;
**caractérisée en ce que**
c. la station d'évidement/épluchage (150) comprend un élément de support mobile (154) pour supporter l'ananas (P) avant et après avoir été poussé à travers ladite au moins une lame circulaire (151).

2. Machine (100) selon la revendication 1,
a. la machine (100) comprenant une première station de traitement (110) comprenant un couteau supérieur (111) pour retirer une extrémité supérieure de l'ananas (P) et un couteau inférieur (112) pour retirer une extrémité inférieure de l'ananas (P) ;
b. le couteau supérieur (111) et le couteau inférieur (112) ayant des directions de coupe parallèles et des plans de coupe parallèles ;
c. le couteau supérieur (111) étant disposé à une distance de couteau mesurée perpendiculairement aux plans de coupe du couteau inférieur (112) ;
d. l'élément de support mobile (154) étant fixé au poussoir axial (152) à une distance d'élément de support du poussoir axial (152) ;
e. la distance d'élément de support étant supérieure ou égale à la distance de couteau.

3. Machine (100) selon l'une des revendications 1 à 2,
a. la machine (100) comprenant une première station de traitement (110) comprenant un couteau supérieur (111) pour retirer une extrémité supérieure de l'ananas (P) et un couteau inférieur (112) pour retirer une extrémité inférieure de l'ananas (P) ;
b. le couteau supérieur (111) et le couteau inférieur (112) ayant des directions de coupe parallèles et des plans de coupe parallèles ;
c. le couteau supérieur (111) étant disposé à une distance de couteau mesurée perpendiculairement aux plans de coupe du couteau inférieur (112) ;
d. la machine (100) comprenant un dispositif de réglage (130) pour régler la distance de couteau ;
e. l'élément de support mobile (154) étant fixé au poussoir axial (152) à une distance d'élément de support du poussoir axial (152) ;
f. la distance d'élément de support étant supérieure ou égale à un maximum de la distance de couteau réglable.

4. Machine (100) selon l'une des revendications 1 à 3,
la station d'évidement/épluchage (150) comprenant un élément de ressort sollicitant l'élément de support mobile (154) vers le poussoir axial (152).

5. Machine (100) selon l'une des revendications 1 à 4,
l'élément de support mobile (154) comprenant au moins un évidement (155) destiné à recevoir ladite au moins une lame circulaire (151).

6. Machine (100) selon l'une des revendications 1 à 5,
a. la machine (100) comprenant une troisième station de traitement (160) pour couper l'ananas (P) en une pluralité de segments en entraînant un couteau de segmentation (162) de la troisième station de traitement (160) le long de l'axe longitudinal de l'ananas (P) dans l'ananas (P) ;
b. la machine (100) comprenant un moteur commun (156) pour entraîner le poussoir axial (152) de la station d'évidement/épluchage (150) et le couteau de segmentation (162) de la troisième station de traitement (160).

7. Machine (100) selon l'une des revendications 1 à 6, la machine (100) comprenant
a. un premier poussoir (140) pour pousser l'ananas (P) sur un premier plan horizontal dans la station d'évidement/épluchage (150) ; et
b. un deuxième poussoir (170) pour pousser l'ananas (P) sur un deuxième plan horizontal disposé sous le premier plan horizontal hors de la station d'évidement/épluchage (150).

8. Machine (100) selon la revendication 7,
a. la machine (100) comprenant une première station de traitement (110) comprenant un couteau supérieur (111) pour retirer une extrémité supérieure de l'ananas (P) et un couteau inférieur (112) pour retirer une extrémité inférieure de l'ananas (P) ;
b. le couteau supérieur (111) et le couteau inférieur (112) ayant des directions de coupe parallèles et des plans de coupe parallèles ;
c. le couteau supérieur (111) étant disposé à une distance de couteau mesurée perpendiculairement aux plans de coupe verticalement au-dessus du couteau inférieur (112) ;
d. le premier poussoir (140) étant disposé de manière à pousser l'ananas (P) à travers la première station de traitement (110) ;
e. une hauteur verticale du premier poussoir (140) étant inférieure à une hauteur verticale du deuxième poussoir (170).

9. Machine (100) selon l'une des revendications 7 à 8,
la machine (100) comprend un entraînement de poussoir commun pour entraîner le premier poussoir (140) et le deuxième poussoir (170).

10. Procédé de préparation automatique d'un ananas (P) entier pour la consommation à un point de vente d'ananas à l'aide d'une machine (100) selon l'une des revendications 1 à 9,
a. le procédé comprenant l'étape de retirer automatiquement le cœur et/ou la peau de l'ananas (P) à l'aide de la station d'évidement/épluchage (150) de la machine (100) ;
b. l'étape de retirer automatiquement le cœur et/ou la peau de l'ananas (P) comprenant le fait de pousser l'ananas (P) le long de son axe longitudinal à travers au moins une lame circulaire (151) de la station d'évidement/épluchage (150) à l'aide du poussoir axial (152) de la station d'évidement/épluchage (150), tandis que la lame circulaire (151) est immobile par rapport à l'environnement de la machine (100) ;
c. l'ananas (P) étant supporté par l'élément de support mobile (154) de la station d'évidement/épluchage (150) avant et après avoir été poussé à travers ladite au moins une lame circulaire (151) .

11. Procédé selon la revendication 10,
a. le procédé comprenant l'étape de couper automatiquement l'ananas (P) en une pluralité de segments en entraînant un couteau de segmentation (162) d'une troisième station de traitement (160) de la machine (100) le long de l'axe longitudinal de l'ananas (P) dans l'ananas (P) ;
b. le poussoir axial (152) de la station d'évidement/épluchage (150) et le couteau de segmentation (162) de la troisième station de traitement (160) étant entraînés par un moteur commun (156) de la machine (100).

12. Procédé selon la revendication 11, le procédé comprenant les étapes suivantes :
a. pousser l'ananas (P) de la station d'évidement/épluchage (150) vers la troisième station de traitement (160) à l'aide d'un deuxième poussoir (170) de la machine (100) ;
b. soulever simultanément le poussoir axial (152) de la station d'évidement /épluchage (150) et le couteau de segmentation (162) de la troisième station de traitement (160) à l'aide du moteur commun (156) pendant que l'ananas (P) est poussé de la station d'évidement/épluchage (150) vers la troisième station de traitement (160).

13. Procédé selon la revendication 12,
le procédé comprenant l'étape d'interrompre l'étape de pousser l'ananas (P) de la station d'évidement/épluchage (150) vers la troisième station de traitement (160) pendant une période d'attente.
